# EUROPEAN PATENT SPECIFICATION

(11) **EP 1 592 311 B1**
(45) Date of publication and mention of the grant of the patent: **05.05.2010**
(21) Application number: 04706281.5
(22) Date of filing: 29.01.2004
(51) Int. Cl.: A23L 1/303, A23D 9/007

(54) **EDIBLE OIL WITH ADDED VITAMINS WHICH FAVOUR THE ASSIMILATION OF CALCIUM**
SPEISEÖL MIT ZUGESETZTEN VITAMINEN, DIE DIE CALCIUMASSIMILATION BEGÜNSTIGEN
HUILE COMESTIBLE ENRICHIE EN VITAMINES FAVORISANT L'ASSIMILATION DU CALCIUM

(30) Priority: 31.01.2003 IT AN20030008
(43) Date of publication of application: 09.11.2005
(73) Proprietor: Petrini, Leonida, I-60033 Monte San Vito (AN) (IT); Petrini, Francesca, I-60033 Monte San Vito (AN) (IT)
(72) Inventor: Petrini, Leonida, I-60033 Monte San Vito (AN) (IT); Petrini, Francesca, I-60033 Monte San Vito (AN) (IT)
(74) Representative: Baldi, Claudio
(86) International application number: PCT/IT2004/000023
(87) International publication number: WO 2004/066754

(56) References cited:
- WO-A-97/32947
- WO-A-98/00038
- WO-A1-99/00135
- DE-U- 20 204 845
- US-A- 5 532 009
- US-A- 5 985 339
- SCHERZ H.,: "Food composition and nutrition tables" 2000, MEDPHARM GMBH SCI. PUBL., , STUTTGART, GERMANY , XP002283434 Food composition and nutrition tables, ISBN 3-88763-076-9 page 425
- FERLAND G ET AL: "VITAMIN K1 (PHYLLOQUINONE) CONTENT OF EDIBLE OILS: EFFECTS OF HEATING AND LIGHT EXPOSURE" JOURNAL OF AGRICULTURAL AND FOOD CHEMISTRY, AMERICAN CHEMICAL SOCIETY. WASHINGTON, US, vol. 40, no. 10, 1 October 1992 (1992-10-01), pages 1869-1873, XP000307217 ISSN: 0021-8561

## Description

This patent application for industrial invention concerns an edible oil with added vitamins which favour the assimilation of calcium.

The oil manufactured according to the invention has been conceived after a careful consideration of facts such as the human physiology and the food habits.

While science underlines the increasing importance of calcium absorption for human health, reliable studies keep on showing the lack of that mineral among people as a serious problem, largely due to their defective food diets.

The reluctance and mistrust of the majority of people against calcium supplying medicines prescribed by doctors have also been taken into consideration.

The lack of calcium is actually a much more serious problem than one would think; in fact it can show when important diseases such as the celiac disease, the sprue, the Crohn disease, colitis, hepatic and pancreatic diseases are present.

The lack of calcium is also evident in subjects using antibiotics or in babies suffering from serious diseases affecting their digestive apparatus and brain, possibly due to the lack of vitamins in their mother milk.

WO 98/00038 discloses a method of adding vitamin D and vitamin K to a food product, such as Olean™.

WO 99/00135 discloses a pharmaceutical composition consisting of a capsule containing an oily medium added with vitamin D, vitamin K and vitamin B.

Based on the above considerations, the aim of the invention is to make an aliment able to combine high nutritional and organoleptic characteristics to an efficient calcium supply.

The olive oil responds to the purpose for some important reasons; not only is it easily appreciated and found on worldwide tables but it is also proven that no specific intolerance to the oil has ever been shown, unlike other equally well known products such as cow milk.

Laboratory tests have unfortunately shown that the simple addition of calcium salts to olive oil makes neither an acceptable quality product nor a convenient one.

In fact neither the calcium nor the common salts are soluble (except the oleate although not proven) and furthermore the addition of calcium to the oil creates a certain doubt concerning its toxicity and its effective assimilability by the human body.

By adding this quantity of calcium, the oil would not have in any case granted a significant effect to the consumer, considering also the limited average consumption of oil per day.

In addition, those calcium salts would have had a high cost and would have unavoidably changed the typical olive oil taste.

Despite the fact that the strategy had seemed simple and immediate, it could not be chosen and after a veritable creative effort, we decided to make the desired product in an alternative way.

So the oil with those added vitamins which favour the assimilation of calcium and its fixation to the human bone structure is basically the idea of the invention.

The oil itself does not act as a direct calcium supplier but it stimulates all the processes through which the body structure can get and use the calcium from food.

Vitamin D3, vitamin K1 **and vitamin B6** are added to the oil in the following quantities:
Vitamin D3 - no less than 0.5 mcg. each 1000 ml of oil
Vitamin K1 - no less than 20 **mcg**. each 1000 ml of oil

### Vitamin B6 - no less than 10 mg. each 1000 ml of oil.

Acting as a "carrier" according to the scientific terms, vitamin D3 stimulates the synthesis of calcium absorption; vitamin K1, generally better known for its antihemorrhagic properties, has in this context, a calcification function.

So the oil obtained can grant several advantages without any side effects.

In fact it grants a high health respect threshold given that the vitaminic content is so limited as to avoid the problems of an eventual overdosage.

On the other hand, if the vitamin absorption is constant through a daily oil consumption, the consumer benefits by a permanent and stable vitaminic covering without having the thought of constantly taking traditional medicines at particular hours.

Thanks to its digestibility and rich nourishing content (more than other oils), the olive oil conceived as a "carrier" for making the vitamin absorption possible, is definitely the right choice. Furthermore it represents a permanent element in the human food diet.

However other versions of the product are also possible using for example other edible oils as basic ingredients, different to olive oil.

It must be said that there are also further benefits other than the calcium assimilation itself; in fact the ingestion of vitamin D3 is also important for the consumer.

It is known that many people suffer from a lack of that specific vitamin, due to the lack of light exposure on one hand (it is known that vitamin D3 is produced by the skin itself when exposed to ultra-violet rays) and to its limited content in food such as fish, eggs and liver.

So making up for the specific lack of vitamin D3 means avoiding the risk of the consequent diseases; we refer to osteomalacia among adults and rachitis among babies.

Although vitamin B6 is not involved in the formation of inorganic bone part, it is essential to the best development and care of the tissue.

It intervenes in the synthesis of collagen, the principal component of the organic matrix of bone, acting as co-factor in the cross binding formation responsible for stabilizing the chain.

## Claims

1. Edible oil, **which is** aliment having high nutritional and organoleptic characteristics, wherein vitamin D3, vitamin K1 and vitamin B6 have been added in the following quantities:
Vitamin D3 - no less than 0.5 mcg. each 1000 ml of oil
Vitamin K1 - no less than 20 **mcg**. each 1000 ml of oil, and
Vitamin B6 - no less than 10 mg. each 1000 ml of oil.

2. Edible oil according to claim 1, **characterized by** the fact that it is olive oil.

3. Edible oil according to claim 1, **characterized by** the fact that it is an edible oil different to olive oil.

## Patentansprüche

1. Speiseöl, welches ein Lebensmittel mit hohem Nährwert und gehobenen organoleptischen Eigenschaften ist, dem die Vitamine D3, K1 und B6 in folgenden Mengen zugesetzt wurden:
Vitamin D3 zu mindestens 0,5 mcg. pro 1000 ml Öl
Vitamin K1 zu mindestens 20 mcg. pro 1000 ml Öl sowie
Vitamin B6 zu mindestens 10 mg. pro 1000 ml Öl.

2. Speiseöl gemäß Anspruch 1, **dadurch gekennzeichnet, dass** es aus Olivenöl besteht.

3. Speiseöl gemäß Anspruch 1, **dadurch gekennzeichnet, dass** es nicht aus Olivenöl, sondern aus einem anderen Speiseöl besteht.

## Revendications

1. Huile alimentaire qui est un aliment ayant des caractéristiques nutritionnelles et organoleptiques élevées, où la vitamine D3, la vitamine K1 et la vitamine B6 sont additionnées selon les quantités suivantes :
vitamine D3 - non inférieure à 0,5 mcg. pour 1000 ml d'huile
vitamine K1 - non inférieure à 20 mcg. pour 1000 ml d'huile, et
vitamine B6 - non inférieure à 10 mg pour 1000 ml d'huile.

2. Huile alimentaire selon la revendication 1, **caractérisée en ce qu'**elle consiste en de l'huile d'olive.

3. Huile alimentaire selon la revendication 1, **caractérisée en ce qu'**elle consiste en de l'huile alimentaire différente de l'huile d'olive.
